(19) Europäisches Patentamt
European Patent Office
Office européen des brevets

(11) EP 3 166 072 A1

(12) EUROPEAN PATENT APPLICATION

(43) Date of publication:
10.05.2017 Bulletin 2017/19

(51) Int Cl.:
*G06T 5/00* $^{(2006.01)}$

(21) Application number: 15306773.1

(22) Date of filing: 06.11.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• Salvador Marcos, Jordi
20257 Hamburg (DE)
• Perez Pellitero, Eduardo
30177 Hannover (DE)

(74) Representative: Huchet, Anne et al
TECHNICOLOR
1-5, rue Jeanne d'Arc
92130 Issy-les-Moulineaux (FR)

(54) METHOD FOR DENOISING AN IMAGE AND APPARATUS FOR DENOISING AN IMAGE

(57) Traditional image denoising requires image analysis or noise level analysis. Differently, the invention provides denoising by dividing an input image into small square overlapping patches, computing and storing the mean value of each patch, and subtracting it from the patch. Each zero-mean patch is then automatically aligned to a reference orientation by computing a few relevant DCT coefficients of the patch, analyzing the patch orientation in terms of transposition, inversion and horizontal and vertical flipping, and applying a re-orientation transform to automatically pose the patch in a standard orientation, regardless of its contents. The re-oriented patches are clustered, and each of the resulting clusters is either shuffled or averaged. Then, all patches are re-transformed back to their original orientations by reversing the previous transforms, their respective mean is added and the denoised image is reconstructed by overlapping the re-transformed and mean added patches.

Fig.5

**Description**

Field of the invention

This invention relates to a method for denoising an image and apparatus for denoising an image.

Background

Several image denoising techniques are known.

In **[Buades2005],** a method based on the exploitation of similar patches within local rectangular windows around each pixel is disclosed that denoises each central pixel by linearly combining the central pixels of the similar patches in the window (non-local means principle).

**[Dabov2007]** discloses a two-step method, where each step includes a grouping of similar patches by block-matching, 3D transform, a collaborative filtering stage and an inverse 3D transform and composition of the reconstructed image. During the first stage, the collaborative filter uses a hard threshold, whereas the second stage uses a finer Wiener denoising filter. The selection of the threshold and filter coefficients requires knowledge of the noise level.

**[Zhang2010]** discloses a two-step denoising method, where each step consists in grouping similar patches within local search windows and then filtering each group, using principal component analysis (PCA) and coefficient shrinkage before reverting the PCA to reconstruct the denoised image. The noise level before each step must be known for selecting the PCA coefficients.

**[Burger2012]** describes a method for denoising based on the Multi-Layer Perceptron that needs specific training of model parameters for different noise levels. It works only for images with fixed size. Even though this is not a patch-based method, Burger's results exemplify the sensitivity of existing denoising approaches to the noise level.

Summary of the Invention

The present invention is based on the recognition of the fact that images can be denoised by dividing the noisy image into small patches and replacing at least noisy patches by similar patches. Due to the overlap, noise is substantially reduced.

In particular, the patches are normalized and clustered, such that similar normalized patches fall into the same cluster. Then, for source patches being some or all patches of the noisy image, replacement patches are selected from the same cluster or generated from a combination of two or more patches from the same cluster. The replacement patches are de-normalized, in a process that is inverse to the normalization of the respective source patch. Then the image is re-assembled from the patches, wherein at least some source patches are replaced by their respective replacement patch, and wherein the patches overlap. For re-assembling, the same overlap is used as for the dividing.

According to an embodiment of the invention, a method for denoising an input image comprises dividing the image into overlapping patches, wherein each pixel of the image belongs to at least two patches, normalizing the patches and storing normalization information for the patches, and clustering the normalized patches into a plurality of clusters according to their similarity. Further steps are, upon the normalized patches being clustered, determining for a current normalized patch of the image to which cluster the current patch belongs, replacing the current patch with a replacement patch, the replacement patch being another patch from said cluster or a combination of at least two patches from said cluster, de-normalizing the replacement patch according to the stored normalization information of the current patch, and using the de-normalized replacement patch to assemble a denoised image, wherein patches overlap and wherein pixel values are obtained by averaging respective pixel values from each contributing patch.

In an embodiment, the normalizing of the patches refers to patch orientation and pixel values of a patch. It comprises, for a current patch, at least one of mean subtraction, orientation normalization and inversion. In an embodiment, mean subtraction means that a mean value of the pixel values of the current patch is subtracted from said pixel values. In an embodiment, orientation normalization means that a spatial orientation of the mean-subtracted current patch is determined, and the mean-subtracted current patch is transposed, rotated and/or flipped to a normal orientation. In an embodiment, inversion means that the pixel values of said mean-subtracted current patch are inverted, before or after or during said orientation normalization.

An apparatus for upscaling an image, in one embodiment, is disclosed in claim 11. An apparatus for upscaling an image, in another embodiment, is disclosed in claim 12.

In one embodiment, the invention relates to a non-transitory computer readable storage medium having stored thereon executable instructions to cause a computer to perform a method for denoising an image, which comprises dividing the image into overlapping patches, wherein each pixel of the image belongs to at least two patches, normalizing the patches and storing normalization information for the patches, and clustering the normalized patches into a plurality of clusters according to their similarity, and, upon the normalized patches being clustered, determining for a current normalized patch of the image to which cluster the current patch belongs, replacing the current patch with a replacement patch, the replacement patch being another patch from said cluster or a combination of at least two patches from said cluster, de-normalizing the replacement patch according to the stored normalization information of the current patch, and using the de-normalized replacement patch to assemble a denoised image, wherein patches overlap and wherein pixel values are obtained by averaging respective pixel values from each contributing patch.

Advantageous embodiments of the invention are disclosed in the dependent claims, the following description and the figures.

Brief description of the drawings

Exemplary embodiments of the invention are described with reference to the accompanying drawings, which show in

Fig.1    a flow-chart of an image denoising method;
Fig.2    inversion, different rotations and flippings of a patch;
Fig.3    mapping of various patches to a single patch;
Fig.4    an example of patch transposition;
Fig.5    a block diagram of an apparatus for image denoising;
Fig.6    a block diagram of another apparatus for image denoising; and
Fig.7    an example of a pixel denoised by patch overlapping.

Detailed description of the invention

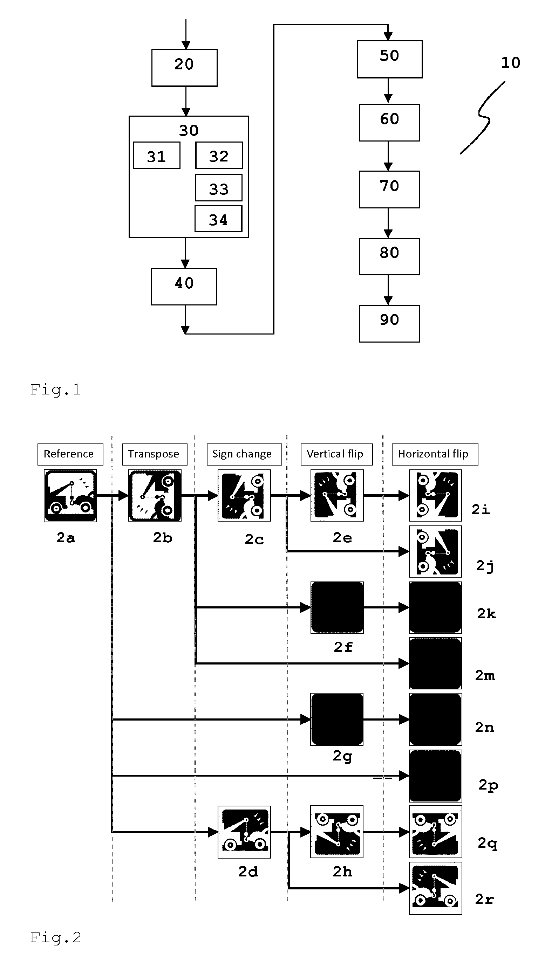

Fig.1 shows in one embodiment a flow-chart of a method for denoising an input image. The method **10** comprises dividing **20** the image into overlapping patches and normalizing **30** the patches. The overlapping of patches in the dividing step **20** is such that each pixel belongs to at least two patches. The overlap usually is (but needs not be) in two dimensions. The normalization information for the patches is stored **40**. Then, the normalized patches are clustered **50** into a plurality of clusters, according to their similarity. That is, after the clustering each cluster comprises a plurality of similar normalized patches. When the normalized patches are clustered, some or all patches of the image are processed as follows: For each current normalized patch of the patches to be processed, it is determined **60** to which cluster the current patch belongs. However, this information may also be available from the clustering step, e.g. this information was stored and is retrieved now. Then, the current patch is replaced **70** with a replacement patch. The replacement patch is, in one embodiment, just a different patch from the same cluster. In another embodiment, the replacement patch is a combination of at least two patches from said cluster. Due to the similarity of the clustered patches, the replacement patch is similar to the current patch. However, if the current patch is noisy, ie. contains "wrong" pixels, then it is very unlikely that the replacement patch contains the same noise as the current patch. Therefore, the noise stemming from the current patch will be reduced. Although the replacement patch may also contain noise, the noise is different from that of the current patch. Due to the below-described subsequent overlapping and averaging, the average noise of the patch will be reduced.

Coming back to Fig.1, in the next step the replacement patch is de-normalized **80** according to the stored normalization information of the current patch. Finally, the de-normalized replacement patches are used to assemble **90** a denoised image, wherein patches overlap. Due to this overlapping, at least two patches contribute to each pixel. Each pixel of the denoised output image is obtained by averaging respective pixels from each contributing patch. The patches that were not replaced still contain their noise. However, with a very high probability the replaced patches contain different noise. Thus, the averaging of patches, where at least one patch has been replaced by a similar parch, leads to a denoising effect.

It is important to understand that, below a certain maximum noise level, the clustering is not selective enough to consider the noise. That is, at least patches that differ only in their noise will be clustered into the same cluster. Preferably, the clustering is less selective, so that also patches that differ in slightly more than only their noise will be clustered into the same cluster. However, the maximum noise level is not a fixed value. If the noise level comes closer to said certain maximum, the resulting noise level of the denoised image will rise gradually, but will still be lower than in the noisy input image, as explained below. As an advantage, compared to known methods, the invention does not require measuring a noise level in the input image. It operates independently from the noise level, and in most cases brings better results than known methods.

In an embodiment, the normalizing **30** of the patches refers to patch orientation and pixel values of a patch. That is, normalizing comprises, for a current patch, at least one of mean subtraction **32,** orientation normalization **33** and inversion **34.**

In mean subtraction **32,** a mean value of the pixel values of the current patch is subtracted from the pixel values. As a result, pixel values of the mean-subtracted patch are negative or positive, and their mean value is zero.

In orientation normalization **33,** a spatial orientation of the mean-subtracted current patch is determined, and the mean-subtracted current patch is transposed, rotated and/or flipped to a normal orientation, as described below.

In inversion **34,** the pixel values of the mean-subtracted current patch are inverted. This may be done before, after or during the orientation normalization **33,** as shown below in an example.

In one embodiment, at least one of the orientation normalization **33** and the inversion **34** is based on DCT-based automatic patch alignment. This means that DCT coefficients of the mean-subtracted patches are calculated **31,** which indicate whether the mean-subtracted patch is to be inverted, transposed, rotated and/or flipped for obtaining its normal orientation. In one embodiment, the DCT coefficients of a 2-dimensional DCT are calculated according to

$$X[k,l] = \sum_{m=0}^{M-1} \sum_{n=0}^{N-1} p[m,n] \cos\left(\frac{\pi}{M}\left(m+\frac{1}{2}\right)k\right) \cos\left(\frac{\pi}{N}\left(n+\frac{1}{2}\right)l\right)$$

wherein *k,l* are horizontal and vertical frequencies of a patch and *M,N* are the horizontal and vertical size of the input image. In one embodiment, the DCT coefficients indicate orientation normalization and inversion as follows.

Fig.2 shows inversion and orientation normalization of a patch, including different rotations and flippings. For clarification, images are shown instead of mean-subtracted patches, while the mean-subtracted patches used herein have negative and positive pixel values, and usually have less details and less pixels than the images shown in Fig.2. Various images **2b,..., 2r** look differently, but can be mapped by few inversion, rotation and/or flipping operations to a single normalized reference image **2a.** For example, an image **2b** can be obtained by transposing the reference image **2a,** and vice versa. Other images **2c,2d** can be obtained by inverting (ie. for the mean-subtracted patches, changing the sign of the pixel values) the transposed image **2a** or the reference image **2a,** respectively, and vice versa. All shown images can be mapped to the reference image **2a** by only four operations: a transposition, an inversion, a vertical flip and a horizontal flip. It is noted that a similar arrangement can be achieved by using a rotation instead of the transposition.

All these transformations can be inverted. For all patches to be clustered, parameters are determined that define which of these transformations are necessary to map the patch to a defined standard orientation and appearance. The parameters are referred to as alignment parameters. In an embodiment, the standard orientation is defined by the following conditions: the first vertical harmonic dominates, the second vertical harmonic is positive, the first horizontal harmonic is positive, and. In this case, the alignment parameters for the four operations can be encoded in four bits $C_1, C_2, C_3, C_4$ as follows.

If $|X[1,0]| > |X[0,1]|$, ie. if the first vertical harmonic is negative, then transpose the picture or patch, according to $p[m,n] := p[n,m]$. Only $X[1,0]$ and $X[0,1]$ need to be computed, while the other DCT coefficients are not required. If the first vertical harmonic is negative, set the corresponding bit $C_1$ to 1 and atomically update the coefficients by swapping, ie. set $X[1,0] := X[0,1]$ and $X[0,1] := X[1,0]$.

If $X[0,2] < 0$, ie. the second vertical harmonic is negative, then negate the picture or patch, according to $p[m,n] := -p[m,n]$. In this case only one DCT coefficient needs to be computed. This coefficient is chosen because it is invariant to both vertical and horizontal flips, and statistically contains a high amount of energy. If the second vertical harmonic is negative, set the corresponding bit $C_2$ to 1 and update the coefficients: $X[1,0] := -X[1,0]$ and $X[0,1] := -X[0,1]$

If $X[0,1] < 0$, ie. the first vertical harmonic is negative, then vertically flip the picture or patch, according to $p[m,n] := p[m,N-1-n]$. Again, only the value of one DCT coefficient needs to be checked. If the first vertical harmonic is negative, set the corresponding bit $C_3$ to 1. No DCT coefficient update is required, because this coefficient will not be used any more in the next step.

If $X[1,0] < 0$, ie. the first horizontal harmonic is negative, then horizontally flip the picture or patch, according to $p[m,n] := p[M-1-m,n]$. Again, only the value of one DCT coefficient needs to be checked. If the first horizontal harmonic is negative, set the corresponding bit $C_4$ to 1.

The modifications of the patch *p* can also be done in a single step after the four bits have been set following the above specified criteria, according to:

$$p[m,n] := (-1)^{C_2} p[(1-C_1)(C_4(M-1)+(-1)^{C_4}m)$$
$$+ C_1(C_3(N-1)+(-1)^{C_3}n), C_1(C_4(M-1)+(-1)^{C_4}m)$$
$$+ (1-C_1)(C_3(N-1)+(-1)^{C_3}n)].$$

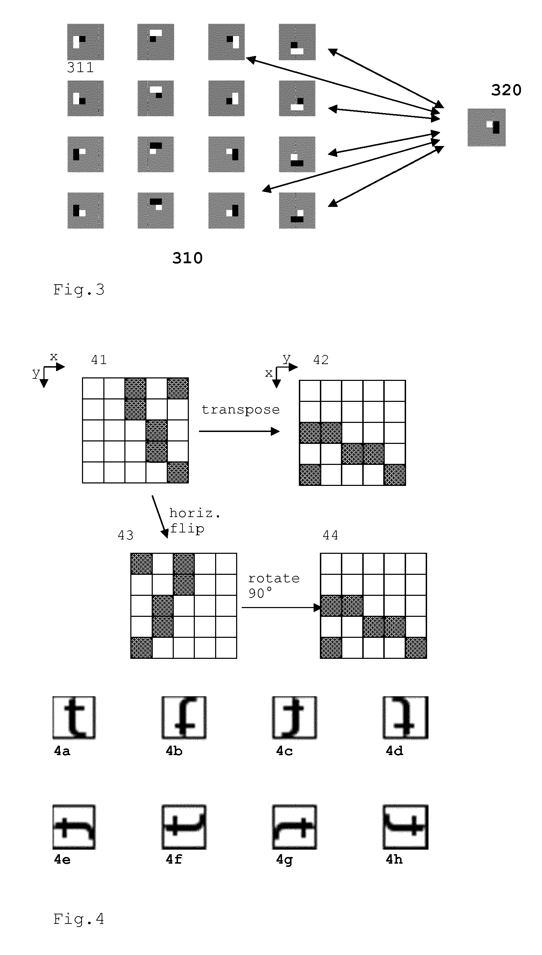

Fig.3 shows an example of 16 different patches **310** that are transformed into a single reference patch **320.** After the clustering and replacement, the four bits will be used to transform the replacement patch back to the original orientation of the particular patch, irrespective of the transform that was originally applied to the replacement patch. For example, if a particular patch **311** is transformed to the reference patch **320** by a horizontal flip and an inversion, the back transform of the replacement patch will also be done by a horizontal flip and an inversion, even if the replacement patch had gone through a different transform before being clustered.

An advantage of this strategy is that the 16 different patch modifications can be easily clustered together with a single comparison, versus a naive approach where the distances with respect to all the possible 16 variations would have to be computed.

Thus, one advantage of the invention is that it allows fast estimation of denoised images, independent from the image size and without the requirement of knowing the noise level. That is, the method generalizes well to any reasonable noise level without estimating it. The estimation is fast because it is based on the analysis of only a small number of DCT coefficients, in embodiments. Further, in comparison with other available approaches, only a very small number of parameters has to be adjusted to make it work. One reason for its good performance is that the invention allows exploiting similar patches from the entire image, even if these recur flipped (mirrored) and/or with different orientations. Only minimum additional computational cost is introduced, namely that of two simple patch transforms: one in the beginning and its reversal right before the image reconstruction. As mentioned, due to DCT-based automatic patch alignment, patches can be recognized as similar even if they are rotated, flipped or transposed.

Fig.4 shows an example of patch transposition. Note that "transpose" refers to a matrix representation of a patch, and the transposed patch is obtained by swapping columns and rows of the patch. Fig.4, in its upper part, shows a simple example of a 5x5 patch **41** and its transpose **42.** Each column in the original patch **41** corresponds to a row in the transposed patch **42,** and vice versa. It is clear that transposing is equivalent to flipping and subsequent (or preceding) rotation. Likewise, rotation is equivalent to flipping and subsequent (or preceding) transposition. E.g. the transpose of the example shown in Fig.4 can also be obtained by horizontal flipping **43** and subsequent 90° counter-clockwise rotation **44.** In the lower part, Fig.2 shows how a square patch **4a** can be transformed in several geometric ways without filtering or interpolating its values while preserving the same structure. In the example, the square patch contains the letter "t". The transformations contain 90 degrees rotation **4f,** horizontal flipping **4c** and vertical flipping **4b,** and combinations of them. This results in eight different patches **4b,...,4h** that can be derived from (or mapped to) the same structure primitive **4a.** The invention maps such corresponding patches, such as **4b,...,4h,** to a primitive patch such as **4a,** and clusters the patches after this mapping. In one embodiment, as in this example, the transform considers only the pattern of the patch and not any possible inversion.

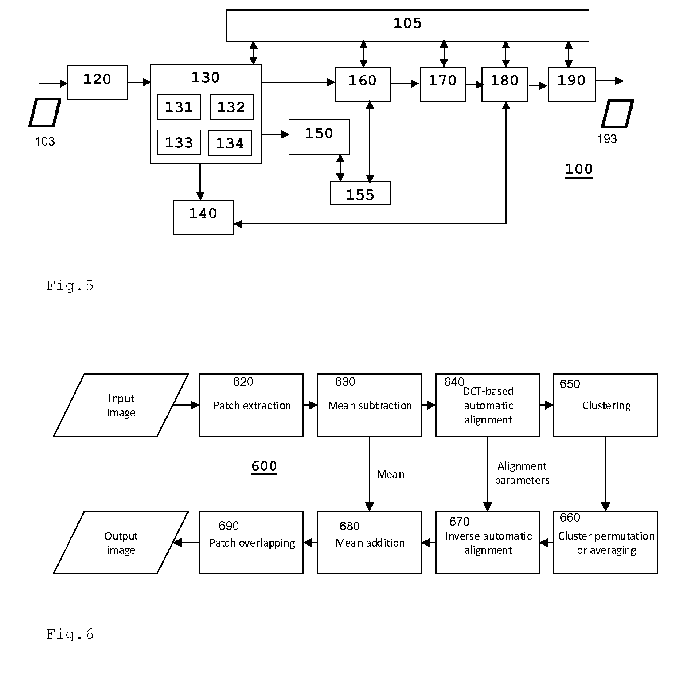

Fig.5 shows, in one embodiment, a block diagram of an apparatus for denoising. In this embodiment, an apparatus **100** for denoising an input image **103** comprises: dividing means **120,** normalizing means **130,** a memory for normalization information storage **140,** clustering means **150** comprising or being connected to a memory **155** adapted for cluster storage, search and comparison means **160,** patch replacement means **170,** patch de-normalizing means **180** and image assembling means **190.**

The dividing means **120** is a module adapted for dividing the image into overlapping patches. The normalizing means **130** is a module adapted for normalizing the patches, and the normalization information storage **140** is a module adapted for storing normalization information for the patches.

The clustering means **150** is a module adapted for clustering the normalized patches into a plurality of clusters according to similarity. The search and comparison means **160** is a module adapted for determining for a current normalized patch of the image to which cluster it belongs. It operates by searching and comparing patches. As described above, this information may also have been stored during clustering, and the search and comparison means **160** may get this information from the clustering means **150.** The patch replacement means **170** is a module adapted for replacing the current patch with a replacement patch. In one embodiment, the replacement patch is another single patch from the same cluster.

In another embodiment, the replacement patch is a combination of at least two patches from said cluster. The de-normalizing means **180** is a module adapted for de-normalizing the replacement patch according to the stored normalization information of the current patch. The image assembling means **190** is a module adapted for assembling a denoised image **193,** wherein the de-normalized replacement patch is used.

In one embodiment, the apparatus **100** further comprises a controller **105** being a module adapted for tracking patches, or patch identifiers, being processed in one or more of the search and comparison means **160,** the patch replacement means **170,** the de-normalizing means **180** and the image assembling means **190.** In one embodiment, the normalizing means **130** comprises at least one of mean subtraction means **132,** orientation normalization means **133,** pixel inversion means **134,** and DCT coefficient calculator means **131.**

It is noted that each of the above-mentioned modules may be implemented, individually and independent from the others, as a hardware (HW) module, a software (SW) module or a SW-controlled HW module, wherein the apparatus for denoising comprises at least one HW module.

Fig.6 shows a block diagram of an apparatus for denoising. In this embodiment, an apparatus **600** for denoising an input image comprises at least (one processor and a memory storing instructions that, when executed by the at least one processor, implement on the at least one processor) the following modules:

a patch extraction module **620** being adapted for extracting overlapping patches, a mean subtraction module **630** being adapted for subtracting from each of the patches its mean value, a DCT-based automatic patch alignment module **640** being adapted for calculating few DCT coefficients per mean-subtracted patch and, based on these DCT coefficients, normalizing each mean-subtracted patch, a clustering module **650** being adapted for automatically clustering the mean-subtracted normalized patches, a patch replacement module **660** being adapted for selecting a replacement patch for a current patch, an inverse alignment module **670** being adapted for reversing the previous automatic alignment of the automatic patch alignment module **640** by transposing, rotating and/or flipping the replacement patches back, from the normalized orientation to the original orientation of the current patch that it replaces, a mean addition module **680** being adapted for reversing the previous mean subtraction of the mean subtraction module **630** by adding the respective mean values to the reverse aligned replacement patches, and a patch overlapping module **690** being adapted for assembling the output image by overlapping the replacement patches.

The clustering module **650** automatically clusters the available mean-subtracted normalized patches using any known clustering algorithm, eg. k-means clustering. Thus, by tuning operation parameters of the used clustering, it can be secured that a sufficient number of clusters is created, and that each cluster contains only similar patches. In principle, it is sufficient for the invention if each cluster contains at least two patches, because then at least one replacement patch can be found for each patch.

The patch replacement module **660** may perform cluster permutation or averaging on the clusters. That is, it may select at least one patch (mean-subtracted normalized) from the same cluster into which a current patch (mean-subtracted normalized) falls to replace the current patch. The at least one selected patch is not the current patch, and it is used, in different embodiments, either as it is, or combined with the current patch, or combined with one or more further patches from the same cluster. The selected patch, or the combined patches, are used as replacement patch for the current patch. The combining may comprise, e.g., averaging of the values of corresponding pixels.

The inverse alignment module **670** receives alignment parameters from the automatic patch alignment module **640** and applies them to the replacement patch, thus reversing the previous automatic alignment. The inverse **680** receives mean values of the input image patches and applies them to the re-aligned replacement patches, thus reversing the previous mean subtraction. The alignment parameters and mean values are normalization information, in one embodiment.

In detail, alignment and mean values of each input image patch are applied to its respective replacement patch, since the replacement patch is inserted in the output image at the position of the input image patch.

It is noted that not necessarily all patches of a noise input image need to be processed as described above. However, the more patches are processed, the better is the denoising effect.

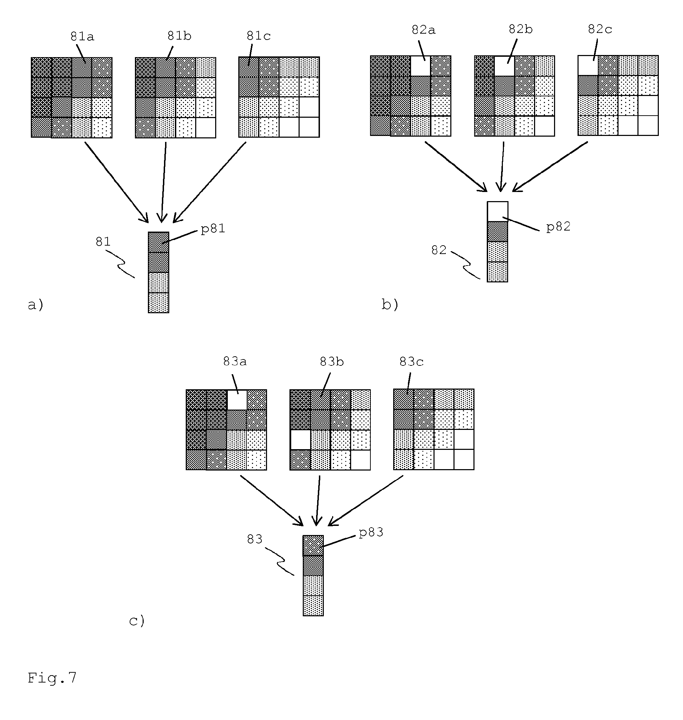

Fig.7 shows an example of how pixels are denoised by patch overlapping. In Fig.7 a), three overlapping patches obtained from a noise-free input image are shown (only horizontal overlap, for simplification of this example). Due to the overlap, different columns of each patch correspond to a column 81 of the input image. Since the input image is noise-free, each of the columns is equal. The original image can be obtained by assembling the patches, wherein the same overlap is used as for the dividing. The assembling, for a pixel **p81** of the column, may be done by adding the values of each corresponding pixel **81a,81b,81c** from the patches and dividing the sum by the number of contributing pixels. Thus, in this ideal case the assembling will provide the same image as the noise-free input image.

Fig.7 b) shows a problem that is solved by the invention. In Fig.7 b), three overlapping patches obtained from a noisy input image are shown (same overlap as before). Due to the noise, the same corresponding pixel **82a,82b,82c** in each of the patches has a wrong value. Simply assembling the patches results in the same column **82** of patches, and therefore in the same image again, including noise **p82.** However, the effect of patch replacement is shown in Fig.7 c). Due to the patch replacement, at least one contributing patch probably does not contain a wrong pixel at the same position as the original patch. Ie., even if a pixel **83a** in a contributing patch is noisy, there is a very high probability that the same pixel **83b,83c** in at least one other contributing patch is not noisy. After assembling the patches with overlap, the resulting pixel **p83** will be closer to the noise-free original, so that noise in the pixel **p83** is substantially reduced. Column **83** of the output image appears much more similar to the noise-free column **81** than column **82,** and therefore disturbance due to noise is substantially reduced. It is noted that Fig.7 c) also explains a case where the replacement patch contains noise, as can be expected. Again, the probability is very high that for each noisy pixel in each contributing patch, the same pixel in at least one other contributing patch is not noisy.

The more patches contribute to each pixel, the better is the denoising effect.

An effect of the DCT-based automatic alignment is that more similar patches are found, so that less clusters are used and, on average, each cluster is more populated. Even though the invention can also be employed without the DCT-based automatic alignment stage, this fast step improves the PSNR by about 1 - 1.5dB, depending on the number of clusters.

In one embodiment, the denoising method works by, first, dividing the input image into small square overlapping patches. Then, the mean value of each patch is computed, stored and subtracted from the patch. Each zero-mean patch is then automatically aligned to a reference orientation by (1) a fast computation of a few relevant Discrete Cosine Transform (DCT) coefficients of the patch, (2) analysis of the patch orientation in terms of transposition, sign change (inversion) and horizontal and vertical flipping, and (3) application of one of the 16 possible re-orientation transforms to automatically pose the patch in a standard orientation regardless of its contents. The reoriented patches are clustered using e.g. the *k-means* algorithm and each of the resulting *k* clusters are either shuffled (which is very fast, but less accurate) or averaged (which is not as fast, but more accurate). Then, all patches are brought back to their original orientations by reversing the re-orientation transforms, their means are added and the denoised image is reconstructed by overlapping patches.

In different embodiments, other clustering algorithms different from k-means clustering, may be used, e.g. spherical hashing or classifications trees. In one embodiment, patches are classified into a user-defined number of classes. An amount of 32 clusters will already bring reasonably good results, but more clusters are preferable. 1024 clusters provide very good performance and quality, but the number can be further increased for additional performance, if sufficient computational power is available.

After clustering, the dominant patch structure is similar among patches in the same cluster. However, the superimposed noise introduces variance within the cluster. Taking into account the overlapping of patches during reconstruction, a simple way of denoising is to just permute the order of the patches within the same cluster, so that the contribution of the noise component is no longer consistent among overlapping patches, and the noise level is accordingly reduced without degrading the structure. Although this stage does not actually perform any classical denoising, the resulting image appears considerably less noisy. An advantage is that the cost is minimal, since no direct operations on the patches are required and the invention works independent from the image content. An alternative approach comprises directly averaging the patches within a cluster, thus keeping the structural part and reducing the variance of the noise component.

Various embodiments of the invention are described below.

In an embodiment, an apparatus for upscaling an input image comprises one or more hardware elements, each hardware element implementing one or more of the modules described above with reference to Fig.5 or Fig.6.

In an embodiment, the used image patches are small compared to the image size. E.g. patches may have a size between 3x3 pixels and 25x25 pixels, or between 0.1% and 2% of the image width. In another embodiment, larger patches are used, e.g. 100x100, 100x150 or 200x200 pixel (e.g. for very high image resolution). However, for larger patches it may be more difficult to find similar patches for clustering. Patches may be rectangular, square or non-square. Patch overlap may be from one pixel row/column up to over 50% of the patch size (in the respective dimension). Horizontal and vertical patch overlap can but needs not be different. For example, 5x5 patches may be used that overlap by 3 pixels in horizontal dimension and 1 pixel in vertical dimension, or by 2 pixels in horizontal dimension and 2 pixels in vertical dimension, or by 4 pixels in horizontal dimension and 2 pixels in vertical dimension, in different embodiments.

In an embodiment, a method for upscaling an input image comprises dividing the image into overlapping patches, wherein each pixel of the image belongs to at least two patches, normalizing the patches and storing normalization information for the patches, and clustering the normalized patches into a plurality of clusters according to their similarity,

and, upon the normalized patches being clustered, determining for a current normalized patch of the image to which cluster the current patch belongs, replacing the current patch with a replacement patch, the replacement patch being another patch from said cluster or a combination of at least two patches from said cluster, de-normalizing the replacement patch according to the stored normalization information of the current patch, and using the de-normalized replacement patch to assemble a denoised image, wherein patches overlap and wherein pixel values are obtained by averaging respective pixel values from each contributing patch.

In one embodiment, normalizing the patches refers to patch orientation and pixel values of a patch, and comprises, for a current patch, at least one of

mean subtraction, wherein a mean value of the pixel values of the current patch is subtracted from said pixel values, orientation normalization, wherein a spatial orientation of the mean-subtracted current patch is determined, and wherein the mean-subtracted current patch is transposed, rotated and/or flipped to a normal orientation, and

inversion, wherein the pixel values of said mean-subtracted current patch are inverted, before or after or during said orientation normalization.

In one embodiment, the method further comprises calculating DCT coefficients of the mean-subtracted current patch, wherein the DCT coefficients indicate whether the mean-subtracted current patch is to be inverted, transposed, rotated and/or flipped for obtaining its normal orientation.

In one embodiment, the DCT coefficients of a 2-dimensional DCT are calculated according to

$$X[k,l] = \sum_{m=0}^{M-1} \sum_{n=0}^{N-1} p[m,n] \cos\left(\frac{\pi}{M}\left(m+\frac{1}{2}\right)k\right) \cos\left(\frac{\pi}{N}\left(n+\frac{1}{2}\right)l\right)$$

wherein *k,l* are horizontal and vertical frequencies of a patch and *M,N* are the horizontal and vertical size of the input image, and wherein DCT coefficients indicate orientation normalization and inversion as follows:

if $|X[1,0]| > |X[0,1]|$, then the patch is to be transposed, and the coefficients are to be updated according to $X[1,0] :=$ $X[0,1]$ and $X[0,1] := X[1,0]$;
if $X[0,2] < 0$, then the patch is to be inverted according to $p[m,n] := -p[m,n]$;
if $X[0,1] < 0$, then the patch is to be vertically flipped according to $p[m,n] := p[m,N - 1 -n]$;
if $X[1,0] < 0$, then the patch is to be horizontally flipped according to $p[m,n] := p[M - 1 -m,n]$.

In one embodiment, the orientation normalization and inversion of the mean-subtracted current patch **p** is done in a single step according to

$$p[m,n] := (-1)^{C_2} p[(1 - C_1)(C_4(M - 1) + (-1)^{C_4}m)$$
$$+ C_1(C_3(N - 1) + (-1)^{C_3}n), C_1(C_4(M - 1) + (-1)^{C_4}m)$$
$$+ (1 - C_1)(C_3(N - 1) + (-1)^{C_3}n)]$$

wherein

C1 is 1 if $(|X[1,0]| > |X[0,1]|)$, and 0 otherwise,
C2 is 1 if $(X[0,2] < 0)$, and 0 otherwise,
C3 is 1 if $(X[0,1] < 0)$, and 0 otherwise, and
C4 is 1 if $(X[1,0] < 0)$, and 0 otherwise.

In one embodiment, obtaining the replacement patch from said cluster comprises permuting the order of patches within said cluster. In one embodiment, a single patch from said cluster is selected as replacement patch. In another embodiment, replacing the current patch with a replacement patch comprises combining at least two patches from the same cluster,
wherein the at least two patches are averaged.
In one embodiment, the replacement patch is obtained by averaging all patches from said cluster.
In one embodiment, the denoising is performed independently from a noise level of the image.
In one embodiment, an apparatus for upscaling an input image comprises at least one processor and a memory storing instructions that, when executed by the processor, cause the processor to perform a method for upscaling an input image, the method comprising
dividing the image into overlapping patches, wherein each pixel of the image belongs to at least two patches, normalizing the patches and storing normalization information for the patches, and
clustering the normalized patches into a plurality of clusters according to their similarity,
and, upon the normalized patches being clustered,
determining for a current normalized patch of the image to which cluster the current patch belongs,
replacing the current patch with a replacement patch, the replacement patch being another patch from said cluster or a combination of at least two patches from said cluster, de-normalizing the replacement patch according to the stored normalization information of the current patch, and using the de-normalized replacement patch to assemble a denoised image, wherein patches overlap and wherein pixel values are obtained by averaging respective pixel values from each contributing patch.
In one embodiment, an apparatus for denoising an image comprises dividing means being adapted for dividing the image into overlapping patches, normalizing means being adapted for normalizing the patches and storage being adapted for storing normalization information for the patches, and clustering means being adapted for clustering the normalized patches into a plurality of clusters according to similarity, the clustering means comprising or being connected to a cluster storage, and, upon the normalized patches being clustered, search and comparison means being adapted for determining, by searching and comparing, for a current normalized patch of the image to which cluster the current patch belongs, patch replacement means being adapted for replacing the current patch with a replacement patch, the replacement patch being another patch from said cluster or a combination of at least two patches from said cluster, de-normalizing means being adapted for de-normalizing the replacement patch according to the stored normalization information of the current patch, and image assembling means being adapted for assembling a denoised image, wherein the de-normalized replacement patch is used.

In one embodiment, the apparatus further comprises a controller being adapted for tracking patch identifiers of patches being processed in the search and comparison means, patch replacement means, de-normalizing means and image assembling means.

In one embodiment, the invention relates to a non-transitory computer readable storage medium having stored thereon executable instructions to cause a computer to perform a method for denoising an image, wherein the method comprises dividing the image into overlapping patches, normalizing the patches and storing normalization information for the patches, and clustering the normalized patches into a plurality of clusters according to their similarity, and, upon the normalized patches being clustered, determining for a current normalized patch of the image to which cluster the current patch belongs, replacing the current patch with a replacement patch, the replacement patch being another patch from said cluster or a combination of at least two patches from said cluster, de-normalizing the replacement patch according to the stored normalization information of the current patch, and using the de-normalized replacement patch to assemble a denoised image, wherein patches overlap.

Advantages of the disclosed denoising strategies include that they are very simple and do not depend on any additional parameters, like e.g. noise level.

Possible further embodiments may include cluster regression, collaborative filtering (like in BM3D), and others. Cluster regression is based on regression, which requires training and is generally understood as a way of finding or defining a relationship between variables (similarity of patches, in this example). During training, a set of regression matrices is determined that are then applied during the clustering stage for deciding how the patches are clustered.

The use of the verb "comprise" and its conjugations herein does not exclude the presence of elements or steps other than those stated in a claim. Furthermore, the use of the article "a" or "an" preceding an element does not exclude the presence of a plurality of such elements. "Modules" may be hardware or software items. Several "means" or "modules" may be represented by the same item of hardware or software. Furthermore, the invention resides in each and every novel feature or combination of features.

The term "denoising" as used herein does not describe a mere mathematical abstraction, but instead denotes information embodied in or carried by a physical medium capable of detection by a machine or apparatus. This term includes recorded or transmitted signals, and should be understood to include conveyance by any form of encoding, including but not limited to pulse code modulation (PCM).

While there has been shown, described, and pointed out fundamental novel features of the present invention as applied to preferred embodiments thereof, it will be understood that various omissions and substitutions and changes in the apparatus and method described, in the form and details of the devices disclosed, and in their operation, may be made by those skilled in the art, within the scope of the present invention. It is expressly intended that all combinations of those elements that perform substantially the same function in substantially the same way to achieve the same results are within the scope of the invention. Substitutions of elements from one described embodiment to another are also fully intended and contemplated. It will be understood that the present invention has been described purely by way of example, and modifications of detail can be made within the scope of the invention. Each feature disclosed in the description and the claims and drawings may be provided independently or in any appropriate combination. Features may, where appropriate be implemented in hardware, software, or a combination of the two.

Cited References

**[Buades2005]** "A non-local algorithm for image denoising", Buades et al., CVPR 2005

**[Dabov2007]** "Image denoising by sparse 3D transform-domain collaborative filtering", Dabov et al., Transactions on Image Processing 2007

**[Zhang2010]** "Two-stage image denoising by principal component analysis with local pixel grouping", Zhang et al., Pattern Recognition 2010

**[Burger2012]** "Image denoising: Can plain Neural Networks compete with BM3D?", Burger et al., CVPR 2012

**Claims**

1. A method (10) for denoising an image, comprising

   - dividing (20) the image into overlapping patches, wherein each pixel of the image belongs to at least two patches;
   - normalizing (30) the patches and storing (40) normalization information for the patches; and
   - clustering (50) the normalized patches into a plurality of clusters according to their similarity;
   and, upon the normalized patches being clustered,
   - determining (60) for a current normalized patch of the image to which cluster the current patch belongs;
   - replacing (70) the current patch with a replacement patch, the replacement patch being another patch from said cluster or a combination of at least two patches from said cluster;
   - de-normalizing (80) the replacement patch according to the stored normalization information of the current patch; and
   - using the de-normalized replacement patch to assemble (90) a denoised image, wherein patches overlap and wherein pixel values are obtained by averaging respective pixel values from each contributing patch.

2. The method according to claim 1, wherein said normalizing (30) the patches refers to patch orientation and pixel values of a patch, and comprises, for a current patch, at least one of

   - mean subtraction (32), wherein a mean value of the pixel values of the current patch is subtracted from said pixel values;
   - orientation normalization (33), wherein a spatial orientation of the mean-subtracted current patch is determined, and wherein the mean-subtracted current patch is transposed, rotated and/or flipped to a normal orientation; and
   - inversion (34), wherein the pixel values of said mean-subtracted current patch are inverted, before or after or during said orientation normalization (33).

3. The method according to claim 2, further comprising calculating (31) DCT coefficients of said mean-subtracted current patch, wherein the DCT coefficients indicate whether the mean-subtracted current patch is to be inverted, transposed, rotated and/or flipped for obtaining its normal orientation.

4. The method according to claim 3, wherein the DCT coefficients of a 2-dimensional DCT are calculated according to

$$X[k,l] = \sum_{m=0}^{M-1} \sum_{n=0}^{N-1} p[m,n] \cos\left(\frac{\pi}{M}\left(m + \frac{1}{2}\right)k\right) \cos\left(\frac{\pi}{N}\left(n + \frac{1}{2}\right)l\right)$$

   wherein $k,l$ are horizontal and vertical frequencies of a patch and $M,N$ are the horizontal and vertical size of the input image, and wherein DCT coefficients indicate orientation normalization and inversion as follows:

   if $|X[1,0]| > |X[0,1]|$, then the patch is to be transposed, and
   the coefficients are to be updated according to $X[1,0] := X[0,1]$ and $X[0,1] := X[1,0]$;
   if $X[0,2] < 0$, then the patch is to be inverted according to $p[m, n] := -p[m, n]$ ;
   if $X[0,1] < 0$, then the patch is to be vertically flipped according to $p[m,n] := p[m,N - 1 - n]$;
   if $X[1,0] < 0$, then the patch is to be horizontally flipped according to $p[m,n] := p[M - 1 -m,n]$.

5. The method according to claim 4, wherein said orientation normalization and inversion of the mean-subtracted current patch $\boldsymbol{p}$ is done in a single step according to

$$p[m,n] := (-1)^{C_2} p[(1 - C_1)(C_4(M - 1) + (-1)^{C_4}m)$$
$$+ C_1(C_3(N - 1) + (-1)^{C_3}n), C_1(C_4(M - 1) + (-1)^{C_4}m)$$
$$+ (1 - C_1)(C_3(N - 1) + (-1)^{C_3}n)]$$

wherein
C1 is 1 if ($|X[1,0]| > |X[0,1]|$), and 0 otherwise,
C2 is 1 if ($X[0,2] < 0$), and 0 otherwise,
C3 is 1 if ($X[0,1] < 0$), and 0 otherwise, and
C4 is 1 if ($X[1,0] < 0$), and 0 otherwise.

6. The method according to any of the claims 1-5, wherein in said replacing (70) the current patch with a replacement patch, obtaining said another patch from said cluster comprises permuting the order of patches within said cluster.

7. The method according to claim 6, wherein a single patch from said cluster is selected as said replacement patch.

8. The method according to any of the claims 1-5, wherein said replacing (70) the current patch with a replacement patch comprises combining at least two patches from said cluster, wherein the at least two patches are averaged.

9. The method according to claim 8, wherein the replacement patch is obtained by averaging all patches from said cluster.

10. The method according to any of the claims 1-9, wherein the denoising is performed independently from a noise level of the image.

11. An apparatus for denoising an image, comprising a processor and a memory storing instructions that, when executed by the processor, cause the processor to perform a method according to any of the claims 1-10.

12. An apparatus (110) for denoising an image, comprising

- dividing means (120) being adapted for dividing the image into overlapping patches;
- normalizing means (130) being adapted for normalizing the patches and storage (140) being adapted for storing normalization information for the patches; and
- clustering means (150) being adapted for clustering the normalized patches into a plurality of clusters according to similarity, the clustering means comprising or being connected to a cluster storage (155);
and, upon the normalized patches being clustered,
- search and comparison means (160) being adapted for determining, by searching and comparing, for a current normalized patch of the image to which cluster the current patch belongs;
- patch replacement means (170) being adapted for replacing the current patch with a replacement patch, the replacement patch being another patch from said cluster or a combination of at least two patches from said cluster;
- de-normalizing means (180) being adapted for de-normalizing the replacement patch according to the stored normalization information of the current patch; and
- image assembling means (190) being adapted for assembling a denoised image, wherein the de-normalized replacement patch is used.

13. The apparatus according to claim 12, further comprising a controller (105) being adapted for tracking patch identifiers of patches being processed in the search and comparison means (160), patch replacement means (170), de-normalizing means (180) and image assembling means (190).

14. A non-transitory computer readable storage medium having stored thereon executable instructions to cause a computer to perform a method for denoising an image, the method comprising

- dividing (20) the image into overlapping patches;
- normalizing (30) the patches and storing (40) normalization information for the patches; and
- clustering (50) the normalized patches into a plurality of clusters according to their similarity;
and, upon the normalized patches being clustered,
- determining (60) for a current normalized patch of the image to which cluster the current patch belongs;
- replacing (70) the current patch with a replacement patch, the replacement patch being another patch from said cluster or a combination of at least two patches from said cluster;
- de-normalizing (80) the replacement patch according to the stored normalization information of the current patch; and
- using the de-normalized replacement patch to assemble (90) a denoised image, wherein patches overlap.

Fig.1

Fig.2

311

320

310

Fig.3

x

y 41

y 42

x

transpose

horiz.
flip

43

44

rotate
90°

4a

4b

4c

4d

4e

4f

4g

4h

Fig.4

Fig.5

Fig.6

Fig.7

Europäisches
Patentamt

European
Patent Office

Office européen
des brevets

# EUROPEAN SEARCH REPORT

Application Number

EP 15 30 6773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/153819 A1 (LIN ZHE [US] ET AL) 5 June 2014 (2014-06-05) | 1,6-12, 14 | INV. G06T5/00 |
| A | * abstract; figure 10 * <br> * paragraph [0021] - paragraph [0024] * <br> * paragraph [0029] - paragraph [0030] * <br> * paragraph [0077] - paragraph [0078] * <br> ----- | 2-5,13 | |
| A | US 2015/206285 A1 (PAJAK DAWID STANISLAW [US] ET AL) 23 July 2015 (2015-07-23) <br> * abstract; claim 15 * <br> * paragraph [0014] * <br> * paragraph [0087] - paragraph [0091] * <br> ----- | 1-14 | |
| A | US 2013/156340 A1 (PORIKLI FATIH [US] ET AL) 20 June 2013 (2013-06-20) <br> * abstract; figure 1 * <br> * paragraph [0015] - paragraph [0042] * <br> * paragraph [0044] * <br> ----- | 1-14 | |
| A | FREEMAN W T ET AL: "Learning Low-Level Vision", <br> INTERNATIONAL JOURNAL OF COMPUTER VISION, KLUWER ACADEMIC PUBLISHERS, BO, <br> vol. 40, no. 1, January 2000 (2000-01), pages 25-47, XP002687991, <br> ISSN: 1573-1405 <br> * the whole document * <br> ----- | 1-14 | TECHNICAL FIELDS SEARCHED (IPC) <br><br> G06T |
| A | JULIEN MAIRAL ET AL: "Non-local sparse models for image restoration", <br> COMPUTER VISION, 2009 IEEE 12TH INTERNATIONAL CONFERENCE ON, IEEE, PISCATAWAY, NJ, USA, <br> 29 September 2009 (2009-09-29), pages 2272-2279, XP031672782, <br> ISBN: 978-1-4244-4420-5 <br> * the whole document * <br> ----- | 1-14 | |

The present search report has been drawn up for all claims

| Place of search | Date of completion of the search | Examiner |
|---|---|---|
| Munich | 13 May 2016 | Herter, Jochen |

EPO FORM 1503 03.82 (P04C01)

## ANNEX TO THE EUROPEAN SEARCH REPORT
## ON EUROPEAN PATENT APPLICATION NO.

EP 15 30 6773

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2016

| Patent document cited in search report | | Publication date | Patent family member(s) | | Publication date |
|---|---|---|---|---|---|
| US 2014153819 | A1 | 05-06-2014 | NONE | | |
| US 2015206285 | A1 | 23-07-2015 | NONE | | |
| US 2013156340 | A1 | 20-06-2013 | JP 2013130573 A | | 04-07-2013 |
| | | | US 2013156340 A1 | | 20-06-2013 |

For more details about this annex : see Official Journal of the European Patent Office, No. 12/82

**EP 3 166 072 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BUADES et al.** A non-local algorithm for image denoising. CVPR, 2005
- **DABOV et al.** Image denoising by sparse 3D transform-domain collaborative filtering. *Transactions on Image Processing,* 2007
- **ZHANG et al.** Two-stage image denoising by principal component analysis with local pixel grouping. *Pattern Recognition,* 2010
- **BURGER et al.** Image denoising: Can plain Neural Networks compete with BM3D?. CVPR, 2012